# EUROPEAN PATENT APPLICATION

(11) **EP 1 120 985 A1**
(43) Date of publication of application: **01.08.2001**
(21) Application number: 00300506.3
(22) Date of filing: 24.01.2000
(51) Int. Cl.: H04Q 7/38

(54) **Cellular radio telecommunications user equipment**

(71) Applicant: LUCENT TECHNOLOGIES INC., Murray Hill, New Jersey 07974-0636 (US)
(72) Inventor: Bhatoolaul, David Lahiri, Swindon, Wiltshire SN5 6BG (GB); Cao, Qiang, Swindon, Wiltshire SN2 3XL (GB); Charriere, Patrick, Tetbury BL8 8DR (GB); Roberts, Michael, Southend on sea, Essex SS2 5EB (GB); Sivagnanasundaram, Sutha, London SW17 4EJ (GB)
(74) Representative: Weitzel, David Stanley

(57) **Abstract**

When communications between user equipment (UE) and a base station (Node B) deteriorate as the UE approaches a cell boundary, eventually, the radio network controller will decide that handover to another cell is necessary. A cellular radio telecommunications network is proposed, in which a new base station responds to information from the radio network controller to send downlink data to the mobile station only after it has received an uplink frame therefrom.

User equipment is disclosed which is responsive to instructions from an existing base station, to begin transmissions to a second base station specified in the instructions, without waiting for receipt of down link communications from the second base station.

## Description

This invention relates to cellular radio telecommunications networks.

When communications between user equipment (UE) and a base station (Node B) deteriorate as the UE approaches a cell boundary, eventually, the radio network controller will decide that handover to another cell is necessary. In the presently proposed UMTS standard instructions are sent to the UE and the new Node B that transmissions should begin on the downlink and the uplink at a precise moment.

When adding a new radio link to a UE's active set, there is a risk that the transmission from the new Node B will be perceived by the UE as additional interference. This may be a problem for instance from the time where the new Node B has activated transmission until the UE has added the radio link to its active set. This is especially important when a UE uses a low spreading factor and consequently high power and/or when the UE is close to the new Node B.

This problem occurs, for instance, when a UE moves fast towards a new cell. If the UE has a rather bad connection to the current cell, the TCP commands in the current cell will be mainly ordering the current Node B to increase power on the down link. Eventually, the radio network controller decides that the UE shall have the new cell included in its active set. This decision may occur late if the UE is moving fast. When the new radio link is activated by (RL SETUP or RL ADDITION REQUEST) it is very likely that the new cell starts to receive the TCP commands ordering an increase in power. Until the UE receives the RRC message ACTIVE SET UPDATE ordering it to add the new Node B to its active set, it will see downlink transmissions from the new Node B as interference which may prevent receipt of the RRC message.

Against this background, a cellular radio telecommunications network is proposed, in which communications between a mobile station in a first cell and a first base station are handed to a second base station as the mobile station enters a second cell under control of a radio network controller, wherein the second base station responds to information from the radio network controller to send downlink data to the mobile station only after it has received an uplink frame therefrom. In the presently proposed standard, this would cause a problem in that the mobile station would be instructed to transmit to a base station which it could not yet see.

This problem is overcome by user equipment in accordance with the invention, for operation in a cellular radio telecommunications network, said equipment being responsive to instructions from a first base station, to begin transmissions to a second base station specified in the instructions, without waiting for receipt of down link communications from the second base station.

The invention extends to a method of operating mobile equipment in a cellular radio telecommunications network, comprising responding to instructions from a first base station, to begin transmissions to a second base station specified in the instructions, without waiting for receipt of down link communications from the second base station.

The invention also extends to a computer program for carrying out the method.

One embodiment of the invention will now be described with reference to the accompanying drawings, in which:

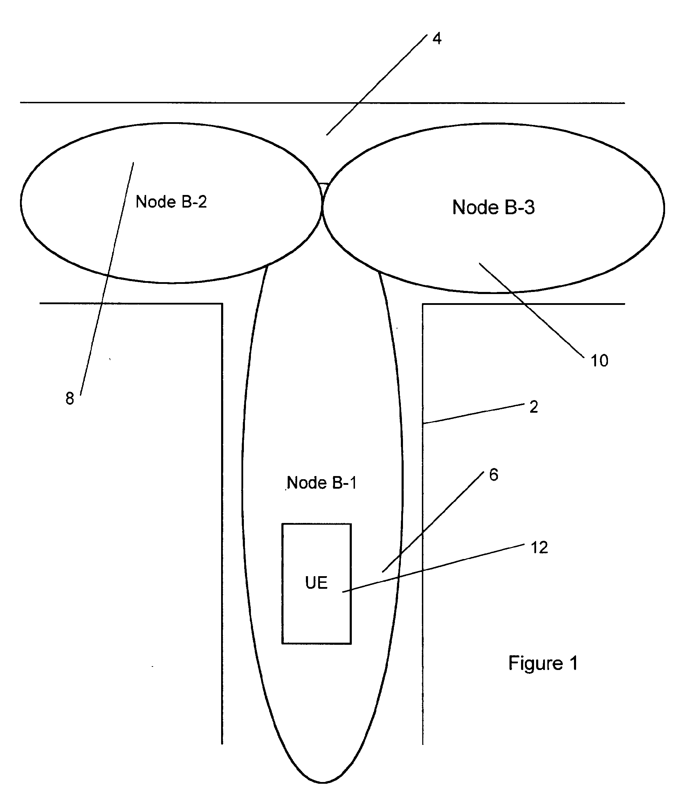

Figure 1 is a schematic plan view of an urban environment in which are located three cells of a cellular radio telecommunications network embodying the invention; and
Figure 2 is a block diagram showing flow of data in the network of Figure 1.

Referring to the drawings, roads 2 and 4 meet at a T-junction. The roads are bounded by high buildings which blank universal mobile telephone service (UMTS) radio signals so that three cells 6,8 and 10, are required, served by base stations Node B-1, Node B-2 and Node B-3. A UE 12 travelling in the road 2 towards the junction is thus served by Node B-1. As it approaches the junction TPC commands within cell 8 will be mainly ordering increased downlink power to maintain the quality of service between the UE 12 and Node B-1. When the UE reaches the junction it will turn left or right (assuming it does not stop) and will require handing over to Node B-2 or Node B-3. In the arrangement shown, the UE will be closer to the new Node B-2 or Node B-3 than it is to Node B-1. If the UE is moving fast and TPC commands to increase downlink power reach, say Node B-3, before a radio link to the node is added to the active set of the UE, in the conventional proposal, downlink transmissions from Node B-3 to the UE will be seen by the UE as interference which may prevent receipt of the signalling information from Node B-1 to add a radio link to Node B-3 to its active set. if it is moving quickly. the UE will remain in radio contact with Node B-1 only briefly. So if the signalling information to add the radio link to Node B-3 to its active set, is transmitted after the UE has turned the corner, Node B-1 is blanked by the high buildings and the information cannot be received.

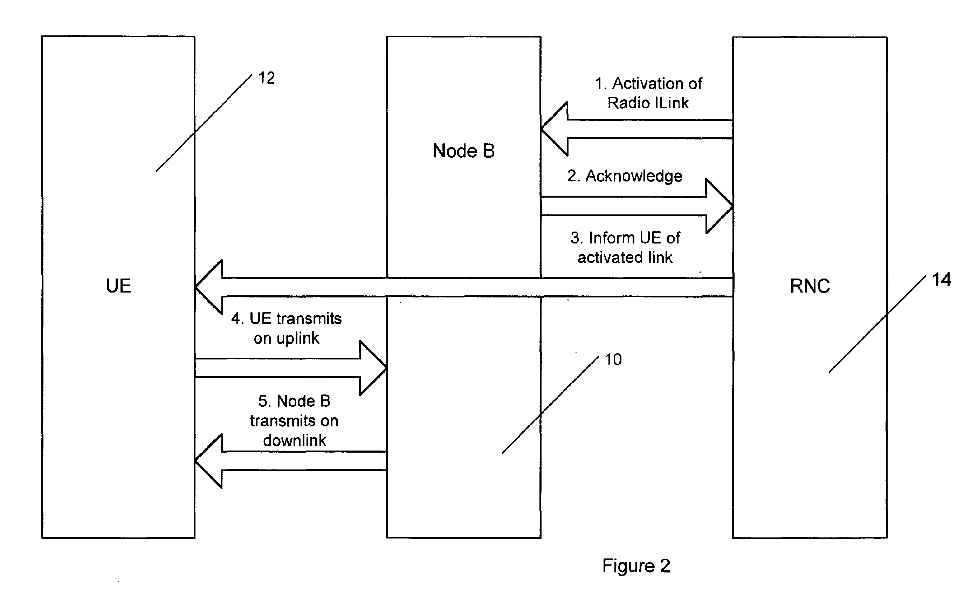

Referring to Figure 2, the radio network controller RNC 14 will predict that communications with the UE will need handover to Node B-2 or Node B-3 in good time. The RNC transmits an instruction to node, say, B-3 to activate a radio link to the UE. Node B-3 returns an acknowledgement. The RNC transmits instructions to the UE via Node B-1, to add a radio link to Node B-3 to its set of active radio links and will begin transmitting on the uplink immediately. To begin, the UE may be so far from the junction as to be blanked from Node B-3. When Node B-3 detects a correct frame of uplink transmissions from the UE, it begins transmitting on the downlink. Node B-3 is set to begin transmissions on the downlink only after detecting signals from the UE at a predetermined power level. In one alternative the power level is set by signalling information sent by the RNC.

## Claims

1. User equipment for operation in a cellular radio telecommunications network, said equipment being responsive to instructions from a first base station, to begin transmissions to a second base station specified in the instructions, without waiting for receipt of down link communications from the second base station.

2. , A method of operating mobile equipment in a cellular radio telecommunications network, comprising responding to instructions from a first base station, to begin transmissions to a second base station specified in the instructions, without waiting for receipt of down link communications from the second base station.

3. A computer program for carrying out the method steps of claim 2.
